# EUROPÄISCHE PATENTSCHRIFT

(11) **EP 0 584 500 B1**
(45) Veröffentlichungstag und Bekanntmachung des Hinweises auf die Patenterteilung: **10.04.1996**
(21) Anmeldenummer: 93110825.2
(22) Anmeldetag: 07.07.1993
(51) Int. Cl.: B25F 5/02, F16B 19/10

(54) **Handwerkzeugmaschine**
Powered hand tool
Machine-outil à main

(30) Priorität: 14.08.1992 DE 4226903
(43) Veröffentlichungstag der Anmeldung: 02.03.1994
(73) Patentinhaber: ROBERT BOSCH GMBH, D-70442 Stuttgart (DE)
(72) Erfinder: Kuhlmann, Gerhard Ing., D-70469 Stuttgart (DE)

(56) Entgegenhaltungen:
- DE-A- 3 722 292
- DE-A- 3 901 728
- DE-B- 1 125 991
- FR-A- 2 116 044
- GB-A- 1 122 512
- US-A- 4 700 876

## Beschreibung

### Stand der Technik

Die Erfindung geht aus von einer vorzugsweise elektrisch angetriebenen Handwerkzeugmaschine nach dem Oberbegriff des Anspruchs 1. Eine Handwerkzeugmaschine dieser Art ist z.B. aus der DE-A-3 901 728 bekannt. Allgemein bekannt sind solche Maschinen mit Gehäuseschalen aus Kunststoff, die mittels metallener Schrauben zusammengehalten werden. Diese sitzen gewöhnlich in gegenüberliegenden Verdickungen bzw. Domen des Gehäuses, die einerseits eine Durchgangsbohrung und andererseits ein Sackloch aufweisen.

Die bekannte Verbindungstechnik hat verschiedene Nachteile. Die Montage der Gehäuse erfordert für das Schrauben einen relativ hohen Zeitaufwand sowie aufwendige Automaten bzw. teuere Arbeitskräfte. Die verwendeten Schrauber entwickeln ein beträchtliches Arbeitsgeräusch. Insbesondere beim Einschrauben von Hand kommt es immer wieder zum Bruch von Schrauben oder zum Aufreißen der Schraubdome. Da die Schraubenköpfe von außen berührbare Metallteile darstellen, müssen sie nach der Montage einer Hochspannungsprüfung unterworfen werden. Die Schraubdome in den Spritzgußgehäuseteilen haben außerdem den Nachteil, daß sich beim Abkühlen wegen der Materialansammlung Schwundstellen bilden. Die die Sacklöcher formenden Nadeln in den Gußwerkzeugen kühlen schlecht ab und verlängern dadurch die Spritzzyklen.

Aus der DE-A-39 01 728 ist bereits eine schraubfreie Verbindung der Handgriffschalen eines zweischaligen Gehäuses für eine Handwerkzeugmaschine bekannt. Nach dem Zusammenfügen der Handgriffschalen ist zur Sicherung der Verbindung ein Bauteil in den bei zusammengefügten Handgriffschalenhälften gebildeten Hohlraum einzuschieben, so daß die bekannte Verbindung zur Bildung eines rundum geschlossenen Gehäuses ungeeignet ist.

### Vorteile der Erfindung

Die erfindungsgemäße Handwerkzeugmaschine mit den kennzeichnenden Merkmalen des Anspruchs 1 hat demgegenüber den Vorteil, die vorgenannten Nachteile zu vermeiden. Das Einschieben eines glatten Stiftes erfordert wesentlich weniger Zeit und Geschicklichkeit bzw. apparativen Aufwand. Montagemängel können praktisch nicht auftreten und eine Hochspannungsprüfung kann ganz entfallen. Weiter ist die Formgebung der Gehäuseschalen, die anstelle von Sacklöchern nur noch Durchgangsbohrungen enthalten, spritztechnisch erheblich günstiger. Außerdem kann die Wandstärke der Dome reduziert werden, was den Raumbedarf der Gehäuseverbindung vermindert.

Durch die in den abhängigen Ansprüchen aufgeführten Maßnahmen sind vorteilhafte Weiterbildungen und Verbesserungen der im Anspruch 1 angegebenen Handwerkzeugmaschine möglich. Besonders vorteilhaft ist es, einen geringen Hinterschnitt der ineinandergeschobenen Dome vorzusehen, sodaß eine formschlüssige Verbindung entsteht. Ein leichtes Stauchen der Stiftenden erschwert das Öffnen des Gerätes durch Unbefugte.

### Zeichnung

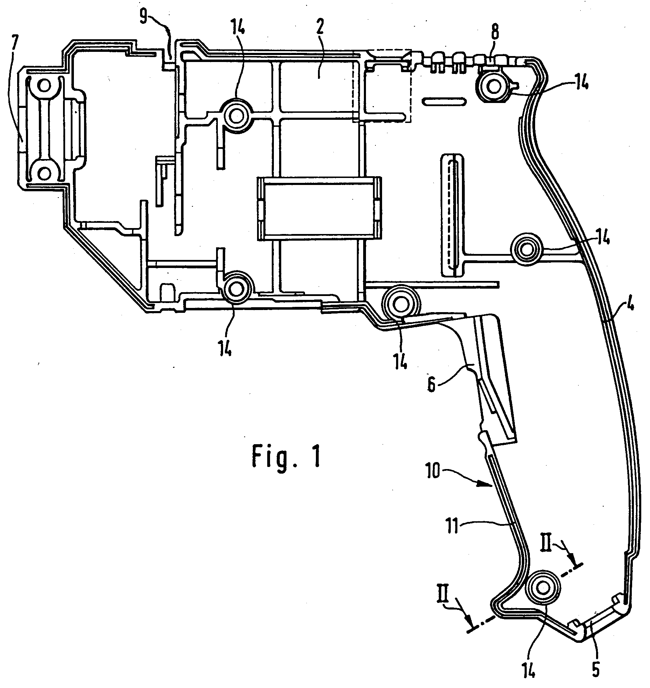

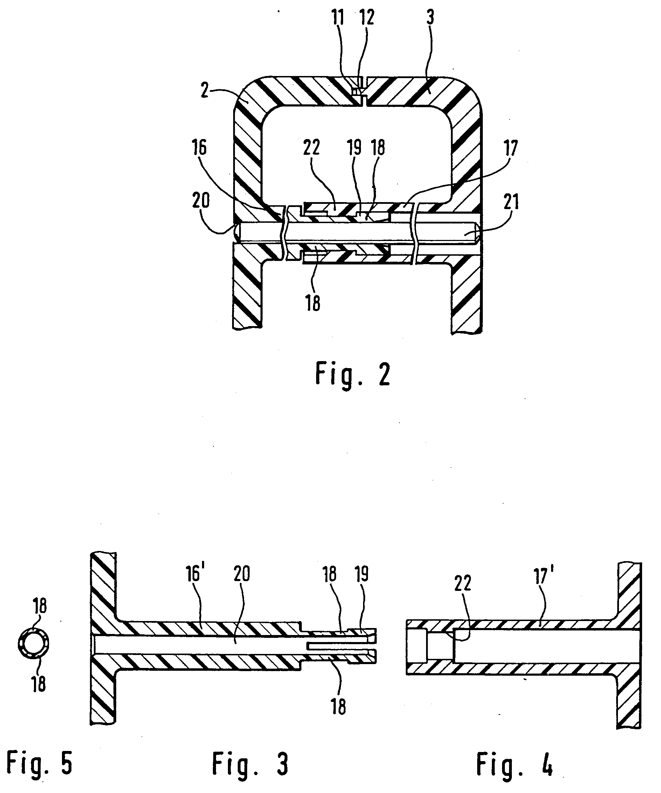

Ein Ausführungsbeispiel der Erfindung ist in der Zeichnung dargestellt und in der nachfolgenden Beschreibung näher erläutert. Figur 1 zeigt eine Innenansicht einer Gehäuseschale, Figur 2 eine Schnittansicht entlang der Linie II-II in Figur 1 und die Figuren 3, 4 und 5 zeigen die Verbindungselemente im Detail.

### Beschreibung des Ausführungsbeispiels

In Figur 1 ist beispielhaft für eine Handwerkzeugmaschine das Gehäuse einer Schlagbohrmaschine abgebildet. Ein solches Gehäuse besteht aus zwei gerippten Gehäuseteilen 2, 3, die als Schalen ausgebildet sind. In Figur 1 ist die vom Handgriff 3 aus gesehen rechte Gehäusehälfte von innen dargestellt. Die Gehäuseschale 2 weist eine Aussparung 5 zum Einführen eines elektrischen Zuleitungskabels und eine Aussparung 6 zum Einsetzen eines Schalters auf. Weiter ist eine Öffnung 7 zum Austritt der Bohrspindel vorgesehen. Im übrigen enthält das Gehäuse noch Lufteintrittsöffnungen 8 und Luftaustrittsöffnungen 9. Ein außer im Bereich der Öffnungen umlaufender, ebener Rand 10 der Gehäuseschale 2 weist eine ebenfalls umlaufende Nut 11 auf, in die eine an dem zweiten Gehäuseteil 3 hervorstehende Leiste 12 eingreift (vgl. Figur 2). Die beiden Gehäuseteile 2 und 3 sind spiegelbildlich etwa gleich, so daß sich insgesamt ein geschlossenes Gehäuse ergibt.

Die beiden Gehäuseteile 2, 3 sind an insgesamt sechs gleichartig ausgebildeten Befestigungspunkten 14 miteinander verbunden. Beispielhaft ist in Figur 2 ein Schnitt durch den am Griffende gelegenen Befestigungspunkt gezeigt. Dort sind gegenüberliegend an beiden Gehäuseschalen rohrförmige Dome 16, 17 angebracht. Der Dom 16 ist in seinem Endabschnitt verjüngt und geschlitzt, so daß sich zwei Zungen 18 bilden (vgl. auch Figuren 3 und 5). Die Enden der Zungen 18 tragen radial nach außen vorstehende Vorsprünge 19. Durch den gesamten Dom hindurch erstreckt sich ein Durchbruch 20 von gleichbleibendem Durchmesser. In dem Durchbruch 20 steckt ein massiver Stift 21 aus Kunststoff, der aufgrund einer Passung mit Schiebe-, Haft- oder Preßsitz dauerhaft in der Bohrung 20 des Doms 16 steckt. Der Durchmesser des Stiftes 21 beträgt vorzugsweise etwa 3 mm.

Der Dom 17 ist durchgängig rohrförmig mit einem Innendurchmesser von etwa 5 mm der etwa dem Außendurchmesser der Vorsprünge 19 des Doms 16 entspricht. Am vorderen Ende ist ein nach innen ragender Bund 22 angeordnet, der im montierten Zustand des Gehäuses einen Formschluß mit dem Vorsprung 19 des Doms 16 bildet.

In den Figuren 3, 4 und 5 sind die Dome 16' und 17' nochmals im einzelnen gezeigt. Sie unterscheiden sich von der Darstellung in Figur 2 nur durch ihre größere Länge. Die Länge der Dome hängt von der am Ort der jeweiligen Befestigungspunkte unterschiedlich großen Dicke der Handwerkmaschine ab, und wird jeweils so gewählt, daß die Gehäuseteile 2, 3 satt aufeinandersitzen.

Die Montage der erfindungsgemäßen Werkzeugmaschine geschieht zunächst wie üblich, in dem in eine der Schalen die inneren Bauteile wie Motor, Getriebe, Schalter und Kabel eingelegt bzw. befestigt werden. Die zweite Gehäuseschale wird sodann passend aufgelegt und angedrückt. Dabei schieben sich die Dome 16 in die Dome 17 hinein, bis die Vorsprünge 19 hörbar mit den Bünden 22 verrasten. Die nachgiebigen und zurückfedernden Zungen 18 erleichtern diesen Vorgang, ohne daß die Dome durch Verformung beansprucht werden. Die Schnappverbindung der Dome führt bereits zu einem vollständig geschlossenen Gehäuse. Um bei starker Beanspruchung oder Herabfallen des Gehäuses ein Aufspringen zu vermeiden, werden in die Durchbrüche 20 entsprechend abgelängte Stifte 21 eingeschoben. Diese haften aufgrund ihrer Reibung ausreichend in den Domen 16, so daß eine weitere Sicherung an sich nicht erforderlich ist. Um ein öffnen der durch Unbefugte zu erschweren, können die Stifte an den Enden jedoch gestaucht werden, so daß jeweils verdickte Köpfe entstehen. Auf der Seite des Domes 16 kann zum Stauchen der durch die Ausformschräge an den Durchbrüchen 20 gebildete Raum genutzt werden. Die Stifte können auch durch Anbringen von Kitt oder dergleichen an den Enden gesichert werden. An sehr stark beanspruchten Stellen des Gehäuses, wie zum Beispiel am Hals der Bohrmaschine, wo die Spindel aus dem Gehäuse austritt, können zur Verbindung der Gehäuseschalen wie im vorliegenden Fall Schrauben beibehalten werden.

Die Gehäuseverbindung über ineinander einschnappende Dome ermöglicht es, die Wandstärke bzw. den Außendurchmesser der Dome auf ca. 8 mm zu reduzieren, da gegenüber einer Schraubverbindung das von dem Gehäusematerial zusätzlich aufzubringende Würgemoment beim Einschrauben wegfällt. Hinzu kommt, daß auch keine Schraubenköpfe mehr unterzubringen sind, wodurch auch der äußere Dom 17 geringer dimensioniert werden kann. Die schlankeren Dome erleichtern die Anordnung der inneren Bauteile der Bohrmaschine und führen beispielsweise auch in der Nähe der Lufteintritts- und Austrittsöffnungen zu einer besseren Durchströmung.

## Patentansprüche

1. Handwerkzeugmaschine mit einem aus mindestens zwei Teilen bestehenden Gehäuse (2, 3), insbesondere Schalengehäuse, dessen Teile an mehreren Befestigungspunkten (14) mit einzusetzenden Verbindungsmitteln miteinander verbunden sind, dadurch gekennzeichnet, daß an den Befestigungspunkten (14) der Gehäuseteile (2, 3) innerhalb von rohrförmigen Domen (16, 17) paarweise zusammengehörige Durchbrüche (20) vorgeformt sind, die koaxial angeordnet und von beiden Seiten durchgängig sind und in die als Verbindungsmittel massive oder rohrförmige Stifte (21) einführbar sind, wobei gegenüberliegende Dome (16, 17) zumindest in ihren Endabschnitten unterschiedliche Durchmesser aufweisen und jeweils paarweise ineinandergreifen.

2. Handwerkzeugmaschine nach Anspruch 1, dadurch gekennzeichnet, daß die Stifte (21) außen eine im wesentlichen glatte Oberfläche aufweisen.

3. Handwerkzeugmaschine nach einem der vorhergehenden Ansprüche, dadurch gekennzeichnet, daß die Dome (16, 17) einstückig in die Gehäuseteile (2, 3) eingeformt sind.

4. Handwerkzeugmaschine nach einem der Ansprüche 1 oder 2, dadurch gekennzeichnet, daß die Dome (16, 17) in Ausnehmungen der Gehäuseteile (2, 3) eingesetzt sind.

5. Handwerkzeugmaschine nach einem der vorhergehenden Ansprüche, dadurch gekennzeichnet, daß der jeweils innere Dom (16) mit einem Vorsprung (19) einen Bund (22) am zugehörigen äußeren Dom (17) hintergreift.

6. Handwerkzeugmaschine nach Anspruch 5, dadurch gekennzeichnet, daß der Vorsprung (19) radial nachgiebig ist.

7. Handwerkzeugmaschine nach einem der vorhergehenden Ansprüche, dadurch gekennzeichnet, daß die Stifte (21) aus Kunststoff, insbesondere aus Kunststoffdraht hergestellt sind.

8. Handwerkzeugmaschine nach einem der vorhergehenden Ansprüche, dadurch gekennzeichnet, daß die Stifte (21) nach dem Einführen in die Durchbrüche (20) an ihren Enden gestaucht werden.

9. Handwerkzeugmaschine nach einem der vorhergehenden Ansprüche, dadurch gekennzeichnet, daß die Dome (16, 17) aus Kunststoff bestehen.

## Claims

1. Powered hand tool with a housing (2, 3) comprising at least two parts, especially a shell-type housing, the parts of which are connected to one another at a plurality of fastening points (14) by means of connection means that require to be inserted, characterized in that openings (20) which are associated with one another in pairs, are arranged coaxially and are open at both ends and into which solid or tubular pins (21) can be inserted as connection means are preformed within tubular domes (16, 17) at the fastening points (14) of the housing parts (2, 3), opposing domes (16, 17) having different diameters, at least in their end sections, and engaging in one another in each case in pairs.

2. Powered hand tool according to Claim 1, characterized in that the pins (21) have an essentially smooth surface on the outside.

3. Powered hand tool according to one of the preceding claims, characterized in that the domes (16, 17) are formed integrally in the housing parts (2, 3).

4. Powered hand tool according to either of Claims 1 or 2, characterized in that the domes (16, 17) are inserted into recesses in the housing parts (2, 3).

5. Powered hand tool according to one of the preceding claims, characterized in that the respective inner dome (16) engages by means of a projection (19) behind a collar (22) on the associated outer dome (17).

6. Powered hand tool according to Claim 5, characterized in that the projection (19) is radially flexible.

7. Powered hand tool according to one of the preceding claims, characterized in that the pins (21) are manufactured from plastic, especially from plastic wire.

8. Powered hand tool according to one of the preceding claims, characterized in that the pins (21) are upset at their ends after insertion into the openings (20).

9. Powered hand tool according to one of the preceding claims, characterized in that the domes (16, 17) are composed of plastic.

## Revendications

1. Machine-outil manuelle dont le boîtier est formé d'au moins deux parties (2, 3) notamment un boîtier en coquille dont les deux parties sont réunies en plusieurs points de fixation (14) par des moyens de liaison à réunir, caractérisée en ce qu'aux points de fixation (14) des parties de boîtier (2, 3), à l'intérieur de prolongements tubulaires (16, 17), on a préformé des passages coaxiaux(20) correspondant par paires, qui se traversent des deux côtés et qui peuvent recevoir, comme moyens de liaison, des tiges pleines tubulaires (21), les prolongements (16, 17) opposés ayant des diamètres différents au moins au niveau de leur segment d'extrémité et venant prendre par paire l'un dans l'autre.

2. Machine-outil manuelle selon la revendication 1, caractérisée en ce que les tiges (21) ont une surface extérieure essentiellement lisse.

3. Machine-outil manuelle selon l'une des revendications précédentes, caractérisée en ce que les prolongements tubulaires (16, 17) sont réalisés en une seule pièce avec les parties de boîtier (2, 3).

4. Machine-outil manuelle selon l'une des revendications 1 ou 2, caractérisée en ce que les prolongements (16, 17) sont prévus dans des cavités des parties de boîtier (2, 3).

5. Machine-outil manuelle selon l'une des revendications précédentes, caractérisée en ce que le prolongement (16), chaque fois intérieur, vient prendre par une partie en saillie (19) derrière une collerette (22) du prolongement extérieur (17) correspondant.

6. Machine-outil manuelle selon la revendication 5, caractérisée en ce que la partie en saillie (19) est souple radialement.

7. Machine-outil manuelle selon l'une des revendications précédentes, caractérisée en ce que les tiges (21) sont en matière plastique, notamment en fil de matière plastique.

8. Machine-outil manuelle selon l'une des revendications précédentes, caractérisée en ce que les extrémités des tiges (21) sont matées après leur introduction dans les passages (20).

9. Machine-outil manuelle selon l'une des revendications précédentes, caractérisée en ce que les dômes (16, 17) sont en matière plastique.
